# EUROPEAN PATENT SPECIFICATION

(11) **EP 1 852 471 B1**
(45) Date of publication and mention of the grant of the patent: **11.12.2013**
(21) Application number: 06113597.6
(22) Date of filing: 05.05.2006
(51) Int. Cl.: C08L 95/00, E01H 1/10

(54) **Method for the selective removal of aromatic and / or phenolic components from a construction material comprising asphalt containing coal tar pitch and the contaminated sub-base of the road constructions**
Verfahren zum selektiven Entfernen von aromatischen und/oder phenolischen Verbindungen aus einem Konstruktionsmaterial enthaltend Asphalt enthaltend Kohleteerschlamm und die verunreinigte Unterbasis der Strassenkonstruktionen
Procédé d'élimination sélective de composés aromatiques et/ou composés phénoliques a partir d'un matériau de construction contenant du brai de houille et une fondation de construction routière contaminée

(43) Date of publication of application: 07.11.2007
(73) Proprietor: Juchem-Asphaltmischwerk-St. Wendel GmbH & Co., 66606 St. Wendel (DE); Backes Bauunternehmung GmbH & Co. KG, 66636 Tholey (DE); Wickler Frères Exploitation S.àr.l., 9099 Ingeldorf (LU); C. Karp-Kneip Matériaux S.A., 1524 Luxembourg (LU); Bâtiment Travaux Publics G.R.E., 67400 Illkirch-Graffenstaden (FR)
(72) Inventor: Albrecht, Pierre, 67200 Strasbourg (FR); Adam, Pierre, 67000 Strasbourg (FR); Richert, Clement, 98800 Noumea, Nouvelle Caledonie (FR)
(74) Representative: Office Freylinger

(56) References cited:
- EP-A- 0 624 692

## Description

The present invention concerns a method for the selective removal of aromatic and / or phenolic components from construction material comprising asphalt containing coal tar pitch and the contaminated sub-base of the road constructions

### Background of the Invention

Until 1980, coal tar pitch (tar) was frequently used as binder for asphalt pavements in almost all European countries. These materials contain environmentally hazardous, toxic, mutagenic and carcinogenic compounds at high concentration.

Asphalt containing tar is classified as a hazardous waste (Hazardous Waste Directive 91/689/EEC, chapter 6.1) under the European Waste Catalogue: List of Hazardous Wastes, Commission Decision [COM (2001) 216 final] item 17.03.01. (Commission Decision 94/3/EC establishing a list of wastes pursuant to Article 1(a) of Council Directive 75/442/EEC on waste and Council Decision 94/904/EC establishing a list of hazardous waste pursuant to Article 1(4) of Council Directive 91/689/EEC on hazardous waste [Part 17 is "Construction And Demolition Wastes (Including Road Construction). The part 17 03 concerns asphalt, tar and tarred products. (17 03 01 asphalt containing tar, 17 03 02 asphalt not containing tar, 17 03 03 tar and tar products)].

Nowadays the old pavements, which were constructed using tar as a binder, are generally in bad condition, since the tar was aged. Hence, there is a need to remove these old pavements. In the European Union, a solution for more than 2.5 billion tons of hot mix mixture (aggregate + tar) has to be found. It has also been found that some of the tar or its components percolated or leached into the lower layers or the sub-base of the roads during the years.

For the time being however, there is no environmentally friendly method available to recycle such asphalt containing tar and the contaminated sub-base of the road constructions. Placing it in a landfill is not acceptable solution, since the product will always remain hazardous. The directives on landfill depositing asphalt containing tar are already very restrictive in some European countries and it can be foreseen that other countries will follow this trend. The first step will be a tremendous increase of the prizes for depositing and later a total depositing interdiction is likely to occur in many countries.

Under defined conditions, like cold mixing and cold application in the construction procedure, a limited reuse of asphalt containing tar in road construction is possible, as long as it is guaranteed, that the contaminated material is completely shielded in the roadbed and no elution or evaporation of the PAHs or phenols is possible. This method, however, does not solve the problem but only passes it on to the next generations.

Incineration of asphalt containing coal tar at temperatures above 1000°C using a gas or oil fired rotary kiln has been suggested. This method may be very effective with regard to the destruction of PAHs and other hazardous substances as they are essentially oxidized to carbon dioxide and water. However, the mechanical properties of the thus obtained material do not meet the requirements for the recycling of the materials for road pavements anymore as a dust-like product is obtained. Another disadvantage of the method is the high energy demand because the whole material including the tar and aggregate has to be heated above 1000°C. Special flue gas treatment is also necessary.

EP 0624692 describes a method for the surface-cleaning of roads aimed at removing oil and grease where water stored at temperature of up to 150°C in a pressure tank is sprayed on the road surface.

Taking the high treatment costs and the unsolved problems with regard to the aggregate destruction into consideration, this is no favorable approach. Moreover, there is no industrial scale plant in operation that fulfils the requirements to incinerate asphalt-containing tar.

There is thus a need for an environmentally friendly way of treating asphalt pavements containing tar as a binder.

### Summary of the Invention

It is an object of the present invention to provide a method for treating asphalt pavement containing tar and the contaminated sub-base of the road constructions in an environmentally friendly way.

According to the present invention, there is proposed a method for the selective removal of aromatic and / or phenolic components from a construction material comprising asphalt containing coal tar pitch and the contaminated sub-base of the road constructions wherein the construction material is contacted with water in the liquid state at temperatures between 150 - 290°C and pressures between 5 - 80 bar and the aromatic and /or phenolic components are transferred from the asphalt into the water.

This method allows separating hazardous substances like PAHs and phenols for the construction material comprising asphalt containing coal tar pitch and the contaminated sub-base of the road constructions or from asphalt pavement containing tar as a binder with the help of an environmentally friendly liquid and energy. The extracted hazardous substances present a low volume as compared to the staring material. The extracted hazardous substances may thus be burnt or disposed of in another environmentally friendly way much more easily since the volume is considerably lower than the volume of the starting material.

The construction material is preferably contacted with water in the liquid state at temperatures between 170°C and 290°C and in particular between 240°C and 270°C. The pressure has to be set in a way so that the water remains in liquid state. The pressure is set preferably from about two to five bars above the pressure at which the water would be boiling at the chosen temperature.

The method may be used either batch wise or continuously i.e. the construction material may be immerged in water in the liquid state at temperatures between 150 - 290°C and pressures between 5 - 80 bar and remain in the water for 0.5 to 3 hours or water may be sprayed onto the asphalt to extract the PAH and phenols selectively.

The asphalt is preferably crushed or milled to an average particle size of less than 15 mm, more preferably to less than 10 mm and most preferably to less than 5 mm.

The aromatic and /or phenolic components may then be extracted from the water and the water may then be recycled.

According to another preferred embodiment, the pH of the water is changed - preferably lowered - before the extraction of the aromatic and / or phenolic components from the water.

The aromatic and /or phenolic components to be extracted from the asphalt are selected - in a preferred embodiment - from the group consisting of polycyclic aromatic hydrocarbons and phenols like naphthalene, acenaphthylene, acenaphtene, fluorene, phenanthrene, anthracene, fluoranthene, pyrene, benzo(a)anthracene, chrysene, benzo(b)fluoranthene, benzo(k)fluoranthene, benzo(a)pyrene, indeno(1,2,3-cd)pyrene, dibenzo(a,h)anthracene, benzo(g,h,i)perylene.

According to another aspect, the invention also concerns a process for recycling a construction material comprising asphalt containing coal tar pitch and the contaminated sub-base of the road constructions wherein the construction material is crushed and treated according to the method described above.

According to yet another aspect, the invention also concerns the use of the recycled construction material obtained according to the process described above for the road construction.

Preferred embodiments of the invention will now be described with reference to the accompanying drawings in which:

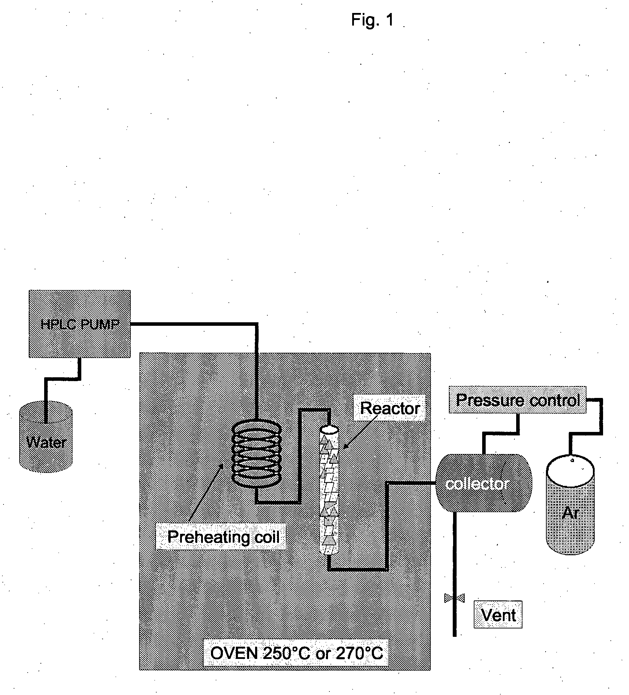

- Fig. 1:: Experimental setup developed for the dynamic water extraction of asphalt containing tar at high temperature;

### Description of a preferred embodiment

It was a mandatory prerequisite to develop appropriate methods for a reliable analysis of the asphalt samples for their PAH and phenol content. The focus was put on the exhaustive extraction of the original samples, since it became obvious after the first preliminary results, that the cold extraction with dichloromethane (CH₂Cl₂), exhibited an extraction rate far below the yield achieved with sonification or soxhlet.

The next step was to develop an appropriate clean-up procedure for the dichloromethane extracts. This had to be carried out individually with respect to the different requirements in HPLC- and GC-Analysis. Finally, an individual method for accurate quantification had to be established for both HPLC and GC. All methods and analytical results are described in the following.

### Method for GC and GC-MS analysis of PAH in asphalt

The developed analysis method is as follows: A three-step batch extraction under sonication was developed to extract contaminants from asphalt. 5 ml CH₂Cl₂ are applied per g asphalt, sonication is applied for 15 minutes and the solid residue and supernatant are separated by centrifugation. To the combined extracts a defined amount of C₂₃ is added as internal standard. Then 100 µl of the organic extracts in CH₂Cl₂ obtained as described above are deposited on a small, dry, silica gel column (55 mm x 5 mm) for purification. A Pasteur pipette can be used for that purpose. The first fraction (1000 µl) eluted with CH₂Cl₂ contains the PAH. This fraction can be directly injected into the GC applying a standard method for separation of the 16 EPA PAHs.

Quantification of PAHs using a flame ionisation detector is carried out relative to C₂₃ n-alkane, as an internal standard, considering the individual ratio of C-atoms. Applying alternatively the highly selective mass spectrometric detection, individual calibration curves (relative to C₂₃) were recorded and considered for quantification. The methods were validated for application with the original course asphalt sample and with a fine homogeneous powder obtained by milling.

A later fraction from the chromatographic clean-up on a silica gel column comprised the phenols. A qualitative phenol analysis was performed with GC-MS, but the phenols were not quantified from GC analysis. Phenol determination was carried out with HPLC and is described later.

### General Findings

Three major conclusions can be drawn from this set of analytical experiments:
1. The sonication batch extraction (3x15 minutes) yields respectively high extraction rates as soxhlet extraction
2. Milling of the asphalt sample to a fine powder prior to aliquotation and extraction is mandatory for a reliable analysis, since the original sample cannot be sufficiently homogenized
3. Since the PAH contents found with this method were significantly more important than those measured by CH₂Cl₂ extraction at low temperature, it must be concluded that the CH₂Cl₂ extraction at low temperature (refrigerator) is not exhaustive

### PAH results with GC-FID

GC-FID analyses were carried out on a gas chromatograph equipped with an on-column injector, a flame ionisation detector (FID) at 300 °C and a HP-5 fused silica column (30 m x 0.32 mm i.d., 0.25 µm film thickness). Hydrogen was used as carrier gas (constant flow 2.5 ml/min). Temperature program was as follows: 40°-150°C (10°C/min), 150°C-300°C (4°C/min), isothermal 300°C. The concentration of the 16 EPA PAHs determined from this analysis is listed in Table 1. The total amount of 3600 mg/kg is more than twice the amount found after cold extraction (1600 mg/kg). As a medium contaminated sample, 2702/4 was selected to perform most of the experiments for development of the treatment procedure.

**Table 1: Amounts of PAH measured in mg/Kg solid material in sample 2702/4 by GC-FID with measured response factor.**

| COMPOUND | Concentration in mg/Kg |
|---|---|
| 1 . Naphthalene | 15 |
| 2. Acenaphthylene | <0.1 |
| 3. Acenaphtene | 94 |
| 4. Fluorene | 112 |
| 5. Phenanthrene | 1145 |
| 6. Anthracene | 311 |
| 7. Fluoranthene | 542 |
| 8. Pyrene | 392 |
| 9. Benzo(a)anthracene | 193 |
| 10. Chrysene | 149 |
| 11. Benzo(b)fluoranthene | 243 sum of Benzo(b)fluoranthene and |
| 12. Benzo(k)fluoranthene | Benzo(k)fluoranthene (not resolved by GC) |
| 13. Benzo(a)pyrene | 184 |
| 14. Indeno(1,2,3-cd)pyrene | 94 |
| 15. Dibenzo(a,h)anthracene | 26 |
| 16. Benzo(g,h,i)perylene | 87 |
| Sum of the 16 PAH: | 3587mg/Kg |

### PAH results with GC-MS

Quantification by GC-MS is theoretically more precise and reliable than quantification by gas chromatography (GC) using a flame ionisation detector as described above. The latter is, in turn, more adequate for a rapid evaluation and monitoring of the efficiency of the treatments on site.

For the selectivity and the sensitivity of the GC-MS method, the selected mode of detection is single ion monitoring (SIM). The ions monitored were m/z 128, 152, 154, 166, 178, 202, 228, 252, 276, 278 corresponding to the molecular masses of the 16 PAH of the EPA list to be quantified and m/z 57 and 324 for the C₂₃ n-alkane, the internal standard. Individual calibration curves were established allowing to evaluate the response factor of the various PAH compared to the n-C₂₃ standard. For that purpose, solutions of standards containing the 16 PAH of the EPA list at various concentrations (from 10 µg/L to 20 mg/L) and a known concentration of the n- C₂₃ standard fixed at 5.00 mg/L have been prepared. The concentration of the internal standard was in the range of the concentration of the n-C₂₃ standard in the PAH fractions isolated from the road asphalt samples for quantification. The complete GC-MS conditions were as follows: GC-MS analyses were carried out on a Varian 1200L spectrometer connected to a Varian CP-3800 gas chromatograph equipped with a Varian CP-8410 autosampler, a Varian 1079 injector and with a Restek RTX5-MS column (60m x 0.25mm x 0.1 µm film thickness). Temperature program: 45°C (1min), 40°C-150°C (10°C/min), 150°C-300°C (4°C/min), isothermal 300°C. Mass spectra were obtained at 70 eV (electron impact) and helium was used as carrier gas (constant flow: 1.7ml/min). In the case of the experiment described in Task I-V, the column used was different: HP5-MS (J&W) (30 m x 0.25 mm, 0.1 µm film thickness). All other conditions were identical. Full scan: 50-400 uma; scan time: 0.4 s.

The quantitative results obtained in the SIM mode according to the procedure described above are given in Table 2. The concentrations are lower than those obtained with the non-selective flame ionization detector. This result must be considered the most accurate achievable by gas chromatography.

**Table 2: Amounts of PAH in mg/Kg solid material of sample 2702/4 determined by the GC-MS quantification method**

| COMPOUND | Concentration in mg/Kg |
|---|---|
| 1 . Naphthalene | 9 |
| 2. Acenaphthylene | <0.1 |
| 3. Acenaphtene | 97 |
| 4. Fluorene | 133 |
| 5. Phenanthrene | 955 |
| 6. Anthracene | 261 |
| 7. Fluoranthene | 550 |
| 8. Pyrene | 407 |
| 9. Benzo(a)anthracene | 136 |
| 10. Chrysene | 129 |
| 11. Benzo(b)fluoranthene | 85 |
| 12. Benzo(k)fluoranthene | 60 |
| 13. Benzo(a)pyrene | 126 |
| 14. Indeno(1,2,3-cd) pyrene | 69 |
| 15. Dibenzo(a,h)anthracene | 19 |
| 16. Benzo(g,h,i)perylene | 67 |
| Sum of the 16 PAH | 3103 mg/Kg |

### Method for sample preparation and HPLC analysis for quantification of PAHs in asphalt

The analysis method is as follows: the asphalt sample is subjected to a soxhlet extraction with CH₂Cl₂ (2 ml solvent per g asphalt) during 4 hours. The extract was purified on a silica column following the protocol described above. From the eluted solution the CH₂Cl₂ was evaporated under rotation at 100 mbar and the residue was filled up to a defined volume with methanol. The methanolic solution could be directly injected into HPLC. An elution gradient reversed phase HPLC method using a standard CIS column was developed for an appropriate separation of the 16 EPA PAHs, since no specialized PAH column was available. The recovery for the complete sample preparation procedure was determined for each individual PAH (between 81% for naphthalene and 99% for phenanthrene). Quantification was carried out using individual external calibration. The use of a UV photodiode array detector enabled peak identification and individual optimisation of selective detection wavelengths.

### General Findings

HPLC analysis yields higher PAH concentrations than GC due to the lower separation efficiency and the influences of the complex matrix

### HPLC analysis of sample 2702/4 for PAH

A method on a C18 reversed phase column was developed as follows: HPLC Apparatus: Alliance (Waters, Germany); Column: Nucleodur C18 Gravity, 5 jam, 150 x 4 mm column (Macherey & Nagel, Diiren, Germany); Gradient: A: water, B: acetonitrile, mixtures given in volume percent, 0..3 min: 60 % B isocratically, 3..30 min: 60 %..100 % B linear gradient, 30..32 min: 100 % B for cleaning the column, T: 38 °C, Flowrate: 1 ml/min.

The data are in good agreement with the GC-FID results determined.

**Table 3: Concentration of PAHs quantified by selective detection in sample 2702/4.**

| PAH | Concentration in mg/kg selective detection |
|---|---|
| Naphthalene | 19 |
| Acenaphthylene | - |
| Acenaphthene | 78 |
| Fluorene | 104 |
| Phenanthrene | 874 |
| Anthracene | 164 |
| Fluoranthene | 661 |
| Pyrene | 436 |
| Benzo(a)anthracene | 265 |
| Chrysene | 195 |
| Benzo(b)fluoranthene | 210 |
| Benzo(k)fluoranthene | 226 |
| Benzo(a)pyrene | 124 |
| Dibenzo(a,h)anthracene | 19 |
| Benzo(g,h,i)perylene | 60 |
| Indeno(1,2,3-cd)pyrene | 63 |
| Sum of PAH's | 3499 |

### Method for sample preparation and HPLC analysis for quantification of phenols in asphalt

The asphalt sample was also subjected to a soxhlet extraction with CH₂Cl₂ (2 ml solvent per g asphalt) during 4 hours. For purification of this extract, a liquid-liquid extraction method was developed transferring the phenols from the CH₂Cl₂ phase into an alkaline aqueous solution at pH 14. The recovery of this step in the presence of matrix was determined (100% for phenol, but only 34% for 1,3,5 trimethylphenol. The alkaline solution is neutralized, filtered and directly injected into HPLC. An isocratic reversed phase HPLC method using a special CIS column with polar modification was developed for an appropriate separation of the 10 selected phenols. Quantification of the phenols is carried out using individual external calibration. The use of a UV photodiode array detector enables peak identification. For the application to the asphalt samples, trace determination capability was required, since several phenols are present below 1 mg/ml.

### HPLC determination of phenols in sample 2702/4

The developed HPLC comprised the following components and parameters: HPLC-Apparatus: Summit System (Dionex, Germering, Germany); Column: ProntoSil CIS ACE EPS 120 A, 3 \j.m (Bischoff, Leonberg), 150 x 4 mm column; Elution Program: A: water, B: acetonitrile, mixtures given in volume percent, 0..17 min: 35 % B isocratical separation, 17..19 min: 35%..100% B linear gradient for column cleaning; T: 38 °C; Flowrate: 1.7ml/min.

The quantitative results for the selected 1-ring and 2-ring phenols are listed in Table 4. Although these concentrations appear negligible relative to the PAH concentrations, they are above the maximum level for unlimited asphalt recycling. Moreover, they markedly exceed the concentrations deducible from the phenol index measured at AGROLAB (see Table 6). This indicates that the phenol extraction is not exhaustive at refrigerator temperature and without sonification, either.

**Table 4: Concentration of phenols determined with the 4 h Soxhlet extraction from sample 2702/4 (fine powder)**

| Peak identification | Substance | Concentration in the solid sample in mg/kg |
|---|---|---|
| 1. | Phenol | 3.8 |
| 2. (2 unresolved substances) | 3-and 4-Methyl phenol | 3.2 |
| 3. | 2-Methyl phenol | 1.0 |
| 4. | 2,6-Dimethyl phenol | 5.2 |
| 5. | 4- Ethyl phenol | 1.0 |
| 6. | 2,4-Dimethyl phenol | 1.0 |
| 7. | 2-Naphthol | 0.2 |
| 8. | 2,4,6-Trimethyl phenol | 1.0 |
| 9. | 1-Naphthol | not found |
| | Sum of all phenols | 16.4 |

### Method for dynamic extraction of asphalt containing tar with water at high temperature

The device developed for the dynamic extraction of asphalt containing tar with water at high temperature is presented in Figure 1. Approximately 14g of sample can be treated with the developed device. Due to the dimension of the reactor, small stones in the 5 mm diameter range have been selected to perform the experiments in order to avoid plugging of the pipes by the fine particles.

The reactor is filled with the sample and closed. A pressure higher than that normally required maintaining the water in the liquid state at the selected temperature is applied to the system (e.g. 50 bar (resp. 60 bar) for an experiment at 250°C (resp. 270°C), whereas only 40 bar (resp. 64 bar) at least are necessary to have liquid water at this temperature). The system is filled with water up to the collector and the oven is heated at the selected temperature. After stabilization of the temperature, water is pumped through the whole system at a flow of 0.66 or 1.00 ml/min for 2 to 4 hours and is collected in the collector autoclave. After cooling to a temperature below 100°C, the recovered aqueous phase and the solid residue were extracted with CH₂Cl₂ and the PAH isolated and quantified according to the developed quantification method.

Quantification of the 16 PAH of the list showed an overall extraction yield of 85% which is far better than those obtained by other methods. The extraction yields for the individual components (Table 5) were of course strongly dependent on the molecular weights (or number of aromatic rings) since di-aromatics such as naphthalene and fluorene could be completely removed whereas the extraction yield was of 75% for chrysene and dropped to approximately 30% for hexacyclic compounds. From the aspect of the aqueous phase obtained from sample 2702/4 at 250°C, it was obvious that, under the used conditions, the binder has not been removed from the stones since it was not black but rather turbid with a yellowish to brownish colour. The CH₂Cl₂ extract of the aqueous phase was also yellow to brownish with a fluorescent aspect whereas the extract of the stones was black indicating that it contains most of the binder. Consequently, the PAHs have been predominantly removed from the binder by solubilisation in the aqueous phase. This is an important result since it shows that PAH can be removed selectively from asphalt containing tar by water extraction at high temperature without removing the binder, which can certainly be recycled.

**Table 5: Amounts of PAH (in mg/Kg of solid material of starting sample 2702/4) in the aqueous phase and in the solid residue after a dynamic extraction experiment with water (1.00 ml/min, 120ml) at 250°C.**

| | Solid Residue | Water | Removed PAH |
|---|---|---|---|
| 1 . Naphthalene | <0.1 | 34 | 100% |
| 2. Acenaphthylene | <0.1 | <0.1 | - |
| 3. Acenaphtene | <0.1 | 163 | 100% |
| 4. Fluorene | <0.1 | 143 | 100% |
| 5. Phenanthrene | 37 | 1194 | 97% |
| 6. Anthracene | 15 | 282 | 95% |
| 7. Fluoranthene | 79 | 735 | 90% |
| 8. Pyrene | 71 | 601 | 89% |
| 9. Benzo(a)anthracene | 64 | 167 | 72% |
| 10. Chrysene | 55 | 161 | 75% |
| 11. Benzo(b)fluoranthene | 149 | 188 | 56% |
| 12. Benzo(k)fluoranthene | (11+12) | (11+12) | (11+12) |
| 13. Benzo(a)pyrene | 53 | 82 | 61% |
| 14. Indeno(1,2,3-cd)pyrene | 72 | 33 | 32% |
| 15. Dibenzo(a,h)anthracene | 23 | 8 | 26% |
| 16. Benzo(g,h,i)perylene | 74 | 35 | 32% |
| Sum of the 16 PAH | 692 mg/Kg | 3826 mg/Kg | 85% |

Higher temperature (270°C) increased extraction yields as illustrated by Table 6. Thus, at 270°C, an overall extraction yield of 95% could be reached on sample 2702/4. The di-, tri- and tetracyclic aromatic hydrocarbons could be almost completely removed as well as more than 80% of the pentacyclic compounds and almost 60% of the higher members of the EPA list. These figures clearly demonstrate that PAHs can be almost completely removed with the exception of a small proportion of the higher members of the EPA list.

**Table 6: Amounts of PAH (in mg/kg solid material of starting sample 2702/4) in the aqueous phase and in the solid residue after dynamic extraction with water at (0.66 mi/min, 120ml) 270°C.**

| | Solid Residue | Water | Removed PAH Water |
|---|---|---|---|
| 1. Naphthalene | <0.1 | 21 | 100% |
| 2. Acenaphthylene | <0.1 | 0.1 | - |
| 3. Acenaphtene | <0.1 | 112 | 100% |
| 4. Fluorene | <0.1 | 143 | 100% |
| 5. Phenanthrene | <0.1 | 1355 | 100% |
| 6. Anthracene | O.I | 349 | 100% |
| 7. Fluoranthene | 5 | 988 | 99% |
| 8. Pyrene | 8 | 783 | 99% |
| 9. Benzo(a)anthracene | 12 | 287 | 96% |
| 10. Chrysene | 11 | 300 | 96% |
| 11. Benzo(b)fluoranthene | 67 | 382 | 85% |
| 12. Benzo(k)fluoranthene | (11+12) | (11+12) | (11+12) |
| 13. Benzo(a)pyrene | 43 | 185 | 81 % |
| 14.Indeno(1,2,3-cd)pyrene | 63 | 82 | 57% |
| 15. Dibenzo(a,h)anthracene | 15 | 19 | 57% |
| 16. Benzo(g,h,i)peryiene | 67 | 84 | 56% |
| Sum of the 16 PAH | 291 mg/Kg | 5090 mg/Kg | 95% |

It should be mentioned that sample 2702/4 is heavily contaminated as compared to asphalt containing tar sample which are more generally encountered. They contain generally less than 1000 mg PAH per kg of solid material. So, the absolute amount of PAH which could be removed under the used conditions were significantly higher, even at 250°C, than the overall content of the average asphalt containing tar sample which will have to be recycled.

Therefore, a less contaminated sample was subjected to dynamic water extraction at 250°C under conditions very similar to those used for sample 2702/4. Sample 2702/7 (see Table 7) was chosen for that purpose. Quantification performed on a homogeneous milled sample from asphalt 2702/7 using the GC-FID described above showed that it contains 2242 mg/Kg of the 16 PAH from the EPA list. As was the case for sample 2702/4, the extraction experiments have been performed on a selection of stones with 5 mm diameter ideally fitting in the reactor.

Table 7 summarizes the extraction yields obtained. The data in the first column indicate the PAH content of the solid residue after having pumped 240ml (2 x 120ml) water through the reactor. The second column ("water 1") indicates the PAH content of the first 120 ml and the second column ("water 2") the PAH content of the additional 120 ml. The fourth and fifth columns give the extraction yields after respectively 120 ml and 240 ml.

**Table 7: Amounts of PAH (in mg/kg solid material of starting sample 2702/7) in the solid residue after extraction with 240 ml of water and in the aqueous phases after extraction with 2x120ml (1.00 ml/min) of water at 250°C.**

| | Solid Residue (after 240ml) | Water 1 | Water 2 | Removed PAH after 120ml | Removed PAH after 240ml |
|---|---|---|---|---|---|
| 1. Naphthalene | <0.1 | 21 | 1 | 97% | 100% |
| 2. Acenaphthylene | <0.1 | <0.1 | O.I | - | - |
| 3. Acenaphtene | <0.1 | 72 | 2 | 97% | 100% |
| 4. Fluorene | <0.1 | 56 | 3 | 95% | 100% |
| 5. Phenanthrene | <0.1 | 366 | 22 | 94% | 100% |
| 6. Anthracene | <0.1 | 59 | 4 | 94% | 100% |
| 7. Fluoranthene | 4 | 329 | 35 | 90% | 99% |
| 8. Pyrene | 3 | 207 | 25 | 88% | 99% |
| 9. Benzo(a)anthracene | 7 | 94 | 22 | 76% | 94% |
| 10. Chrysene | 7 | 92 | 22 | 76% | 95% |
| 11. Benzo(b)fluoranthene | 26 | 100 | 37 | 61% | 84% |
| 12. Benzo(k)fluoranthene | (11+12) | (11+12) | (11+12) | (11+12) | (11+12) |
| 13. Benzo(a)pyrene | 16 | 45 | 17 | 58% | 79% |
| 14. lndeno(1,2,3-cd)pyrene | 18 | 19 | 10 | 41% | 61% |
| 15. Dibenzo(a,h)anthracene | 4 | 5 | 3 | 41% | 66% |
| 16. Benzo(g,h,i)perylene | 17 | 18 | 8 | 42% | 60% |
| Sum of the 16 PAH | 102 mg/Kg | 1483 mg/Kg | 211 mg/Kg | 83% | 94% |

An almost complete removal of the PAH from a less contaminated sample could be achieved with water at 250°C. Extraction rates of the same order of magnitude as those observed in the case of sample 2702/4 at 270°C could be attained at 250°C but twice the amount of water was required.

**Table 8: Extraction yields determined for the 16 PAH of the EPA list after extraction with 120 ml of water at 250°C performed on approximately 14 g of sample 2702/4 (col.1), sample 2702/7 (col.2) and sample 2702/7 after a preliminary extraction step performed at 250°C with 120 ml of water (col.3). The initial PAH content (Init. Cont.) of the 3 samples is indicated at the top of the columns.**

| | Removed PAH 2702/4 (120ml) Init. Cont. 4518 mg/Kg | Removed PAH 2702/7 (120ml) Init. Cont. 1796 mg/Kg | Removed PAH 2702/7 (add. 120ml) Init. Cont. 3 13 mg/Kg |
|---|---|---|---|
| 1. Naphthalene | 100% | 97% | 100% |
| 2. Acenaphthylene | - | - | - |
| 3. Acenaphtene | 100% | 97% | 100% |
| 4. Fluorene | 100% | 95% | 100% |
| 5. Phenanthrene | 97% | 94% | 100% |
| 6. Anthracene | 95% | 94% | 100% |
| 7. Fluoranthene | 90% | 90% | 90% |
| 8. Pyrene | 89% | 88% | 88% |
| 9. Benzo(a)anthracene | 72% | 76% | 77% |
| 10 Chrysene | 75% | 76% | 76% |
| 11. Benzo(b)fluoranthene | 56% | 61% | 58% |
| 12. Benzo(k)fluoranthene | (11+12) | (11+12) | (11+12) |
| 13. Benzo(a)pyrene | 61% | 58% | 53% |
| 14.Indeno(1,2,3-cd)pyrene | 32% | 41% | 35% |
| 15 . Dibenzo(a,h)anthracene | 26% | 41% | 39% |
| 16. Benzo(g,h,i)perylene | 32% | 42% | 32% |
| Sum of the 16 PAH | 85% | 83% | 67% |

The extraction yields for sample 2702/7 after the first 120 ml have been pumped through the reactor at 250°C can be compared with those obtained for sample 2702/4 under similar conditions (Table 5 above). Although the overall PAH contents of both samples are different (as well as the absolute amounts of PAH extracted), the extraction yields are very similar: 83-85% for the overall extraction yields, almost 100% for di- and tricyclic PAHs -75% for tetracyclic PAHs like chrysene, ~60% for benzo(a)pyrene and 30-40% for the hexacyclic compounds. In addition, taking into account that the amount of sample 2702/4 treated contains approximately 60 mg PAH and that the solubility of benzo(a)pyrene is of approximately 1.1 mg/ml, the 120ml water used in the case of the reported experiments should be sufficient to solubilize the whole PAH fraction from the treated sample since the di-, tri-and tetracyclic PAH are certainly more soluble than benzo(a)pyrene. It seems, thus, that solubility of aromatics is not the only factor influencing the extraction process. If this would have been the case, it is likely also that we would, for instance, have completely removed the PAH of sample 2702/7 under conditions (250°C, 120ml) which allowed a removal of 85% of the PAH from sample 2702/4 since the absolute amount removed from sample 2702/4 (~52.5mg corresponding to 3826 mg/kg in the experiment reported above) is higher than the global PAH content of the treated sample 2702/7 (~21.9 mg corresponding to 1796 mg/kg). In addition, the extraction yields for the various PAHs when sample 2702/7 was extracted with additional 120 ml are again very comparable (columns 3 in Table 21 and Figure 21), although the initial content of this pre-extracted sample is of only 313 mg/kg (3.81 mg absolute content). Of course the global extraction yield (67%) is different in this case due to the fact that the solid residue which has been treated with additional 120ml is relatively enriched in the higher PAH (tetra- to hexacyclics) as compared to untreated sample 2702/7.

The application of the dynamic water extraction at 270°C to asphalt sample 2702/4 was also characterized for its phenol removal capacity. Therefore the dichloromethane extracts were prepared. In the extract from the treated asphalt, all phenols were below the detection limits (<0.2 mg/kg). The analysis of the extract from the process water, a similar pattern and global phenol content was found as in the original sample, with a slightly higher amount of 2,4-dimethylphenol and 2-naphthol.

Two conclusions can be drawn from these results:
1. The dynamic heated water extraction enables complete phenol removal from asphalt containing tar samples
2. There is only a slight phenol generation from non-substituted aromatics during the dynamic water extraction procedure at a temperature of 270°C

## Claims

1. A method for the selective removal of aromatic and / or phenolic components from a construction material comprising asphalt containing coal tar pitch and the contaminated sub-base of the road constructions wherein the construction material is contacted with water in liquid phase at temperatures between 150 - 290°C and pressures between 5 - 80 bar and the aromatic and /or phenolic components are transferred from the asphalt into the water.

2. Method according to claim 1, wherein the construction material is contacted with water in the liquid state at temperatures between 170°C and 290°C and in particular between 240°C and 270°C.

3. Method according to claim 1 or 2, wherein the pressure is set from two to five bars above the pressure at which the water would be boiling at the chosen temperature.

4. Method according to any of the preceding claims, wherein the method is used batch wise.

5. Method according to any of the claims 1 to 3, wherein the method is used continuously

6. Method according to any of the preceding claims, wherein the aromatic and /or phenolic components are extracted from the water and the water is recycled.

7. Method according to claim 6, wherein the pH of the water is changed before the extraction.

8. Method according to any of the preceding claims, wherein the aromatic and /or phenolic components are selected from the group consisting of polycyclic aromatic hydrocarbons and phenols.

9. Method according to claim 8, wherein the aromatic and /or phenolic components are selected from the group consisting of naphthalene, acenaphthylene, acenaphtene, fluorene, phenanthrene, anthracene, fluoranthene, pyrene, benzo(a)anthracene, chrysene, benzo(b)fluoranthene, benzo(k)fluoranthene, benzo(a)pyrene, indeno(1,2,3-cd)pyrene, dibenzo(a,h)anthracene, benzo(g,h,i)perylene.

10. A process for recycling a construction material comprising asphalt containing coal tar pitch and the contaminated sub-base of the road constructions wherein the construction material is crushed and treated according to the method of any of the claims 1 to 9.

11. Use of the recycled construction material obtained according to the process of claim 10 for the road construction.

## Patentansprüche

1. Verfahren zum selektiven Entfernen von aromatischen und/oder phenolischen Komponenten aus einem Konstruktionsmaterial umfassend Asphalt enthaltend Kohlenteerpech und den verunreinigten Unterbau der Straßenkonstruktionen, wobei das Konstruktionsmaterial mit Wasser in flüssiger Phase bei Temperaturen zwischen 150-290 °C und Drücken zwischen 5-80 bar in Kontakt gebracht wird und die aromatischen und/oder phenolischen Komponenten aus dem Asphalt in das Wasser übertragen werden.

2. Verfahren nach Anspruch 1, wobei das Konstruktionsmaterial mit Wasser in dem flüssigen Zustand bei Temperaturen zwischen 170 °C und 290 °C und insbesondere zwischen 240 °C und 270 °C in Kontakt gebracht wird.

3. Verfahren nach Anspruch 1 oder 2, wobei der Druck auf zwei bis fünf bar über dem Druck, bei welchem das Wasser bei der gewählten Temperatur sieden würde, eingestellt wird.

4. Verfahren nach irgendeinem der vorangehenden Ansprüche, wobei das Verfahren chargenweise angewendet wird.

5. Verfahren nach irgendeinem der Ansprüche 1 bis 3, wobei das Verfahren kontinuierlich angewendet wird.

6. Verfahren nach irgendeinem der vorangehenden Ansprüche, wobei die aromatischen und/oder phenolischen Komponenten aus dem Wasser extrahiert werden und das Wasser wiederverwendet wird.

7. Verfahren nach Anspruch 6, wobei der pH-Wert des Wassers vor der Extraktion geändert wird.

8. Verfahren nach irgendeinem der vorangehenden Ansprüche, wobei die aromatischen und/oder phenolischen Komponenten aus der Gruppe bestehend aus polycyclischen aromatischen Kohlenwasserstoffen und Phenolen ausgewählt sind.

9. Verfahren nach Anspruch 8, wobei die aromatischen und/oder phenolischen Komponenten aus der Gruppe bestehend aus Naphthalen, Acenaphthylen, Acenaphten, Fluoren, Phenanthren, Anthracen, Fluoranthen, Pyren, Benzo(a)anthracen, Chrysen, Benzo(b)fluoranthen, Benzo(k)fluoranthen, Benzo(a)pyren, Indeno(1,2,3-cd)pyren, Dibenzo(a,h)anthracen, Benzo(g,h,i)perylen ausgewählt sind.

10. Verfahren zur Wiederverwendung eines Konstruktionsmaterials umfassend Asphalt enthaltend Kohlenteerpech und den verunreinigten Unterbau der Straßenkonstruktionen, wobei das Konstruktionsmaterial gemäß dem Verfahren nach irgendeinem der Ansprüche 1 bis 9 zerkleinert und behandelt wird.

11. Verwendung des wiederverwendeten Konstruktionsmaterials, das gemäß dem Verfahren nach Anspruch 10 erhalten wurde, für die Straßenkonstruktion.

## Revendications

1. Procédé pour l'élimination sélective des composants aromatiques et/ou phénoliques d'un matériau de construction comprenant de l'asphalte contenant du brai de goudron de houille et de la sous-couche contaminée des constructions de routes, dans lequel le matériau de construction est mis en contact avec de l'eau en phase liquide à des températures comprises entre 150 et 290°C et des pressions comprises entre 5 et 80 bars, et les composants aromatiques et/ou phénoliques sont transférés de l'asphalte dans l'eau.

2. Procédé selon la revendication 1, dans lequel le matériau de construction est mis en contact avec de l'eau à l'état liquide à des températures comprises entre 170°C et 290°C et en particulier entre 240°C et 270°C.

3. Procédé selon la revendication 1 ou 2, dans lequel la pression est réglée entre deux et cinq bars au-dessus de la pression à laquelle l'eau serait à ébullition à la température choisie.

4. Procédé selon l'une quelconque des revendications précédentes, dans lequel le procédé est utilisé en discontinu.

5. Procédé selon l'une quelconque des revendications 1 à 3, dans lequel le procédé est utilisé en continu.

6. Procédé selon l'une quelconque des revendications précédentes, dans lequel les composants aromatiques et/ou phénoliques sont extraits de l'eau et l'eau est recyclée.

7. Procédé selon la revendication 6, dans lequel le pH de l'eau est changé avant l'extraction.

8. Procédé selon l'une quelconque des revendications précédentes, dans lequel les composants aromatiques et/ou phénoliques sont choisis dans le groupe constitué des hydrocarbures aromatiques polycycliques et des phénols.

9. Procédé selon la revendication 8, dans lequel les composants aromatiques et/ou phénoliques sont choisis dans le groupe constitué par le naphtalène, l'acénaphtylène, l'acénaphtène, le fluorène, le phénanthrène, l'anthracène, le fluoranthène, le pyrène, le benzo(a)anthracéne, le chrysène, le benzo(b)fluorarithène, le benzo(k)fluoranthène, le benzo(a)pyrène, l'indéno(1,2,3-cd)pyrène, le dibenzo(a,h)anthracène, le benzo(g,h,i)pérylène.

10. Procédé de recyclage d'un matériau de construction comprenant de l'asphalte contenant du brai de goudron de houille et de la sous-couche contaminée des constructions de routes, dans lequel le matériau de construction est broyé et traité selon le procédé de l'une quelconque des revendications 1 à 9.

11. Utilisation du matériau de construction recyclé obtenu selon le procédé de la revendication 10 pour la construction de routes.
